# EUROPÄISCHE PATENTANMELDUNG

(11) **EP 3 889 890 A1**
(43) Veröffentlichungstag der Anmeldung: **06.10.2021**
(21) Anmeldenummer: 20167345.6
(22) Anmeldetag: 31.03.2020
(51) Int. Cl.: G06T 7/00, G06T 7/194, G06T 7/73

(54) **VERFAHREN ZUR MESSOBJEKTERKENNUNG AUF BASIS VON BILDDATEN**

(71) Anmelder: Carl Zeiss Industrielle Messtechnik GmbH, 73447 Oberkochen (DE)
(72) Erfinder: Mayr Adam, Ana Carolina, 73430 Aalen (DE); Steinigeweg, Dennis, 49504 Lotte-Wersen (DE); Neumaier, Kilian, 89520 Heidenheim (DE); Rieger, Stephan, 73447 Oberkochen (DE)
(74) Vertreter: Witte, Weller & Partner Patentanwälte mbB

(57) **Zusammenfassung**

Verfahren zur Messobjekterkennung auf Basis von Bilddaten, das die Schritte aufweist: Empfangen (S100) einer Vielzahl von Trainings-Bilddaten von Bildern (42), die jeweils von einem Trainingsobjekt (44) erfasst wurden und jeweils zumindest teilweise das Trainingsobjekt (44) und einen Objekthintergrund (46) zeigen; Empfangen (S200) von Trainings-Segmentierungsdaten zu jedem der Bilder (42), die jeweils eine Segmentierung (48) aufweisen, durch die das zumindest teilweise gezeigte Trainingsobjekt (44) in jedem der Bilder (42) identifiziert und von dem Objekthintergrund (46) unterschieden wird; Empfangen (S300) von Mess-Bilddaten eines Messbildes, das zur Auswertung eines Messobjekts (14) erfasst wird und zumindest teilweise das Messobjekt (14) und den Objekthintergrund (46) zeigt; Ermitteln (S400) eines Segmentierungsmodells (50) zur Erkennung des Messobjekts (14) in dem Messbild auf Basis der Vielzahl von Trainings-Bilddaten und Trainings-Segmentierungsdaten mittels maschinengestützten Lernens.

## Beschreibung

Die vorliegende Erfindung betrifft ein Verfahren und eine Vorrichtung zur Messobjekterkennung auf Basis von Bilddaten. Ferner betrifft die vorliegende Erfindung ein Computerprogrammprodukt, mit Hilfe dessen das erfindungsgemäße Verfahren auf einem Computer ausführbar ist. Weiterhin betrifft die Erfindung ein Messgerät mit einem Messsensor und der erfindungsgemäßen Vorrichtung.

Bei der erfindungsgemäßen Vorrichtung handelt es sich vorzugsweise um ein dimensionelles Messgerät. Bei derartigen dimensionellen Messgeräten erfolgt die Messplanung und Steuerung in der Regel softwarebasiert.

Dimensionelle Messgeräte, für die eine solche softwarebasierte Planung und Steuerung des Messablaufs eingesetzt wird, sind beispielsweise Koordinatenmessgeräte oder Mikroskope. Rauhigkeitsmessgeräte oder andere Messgeräte zum Messen von Abständen und/oder Oberflächeneigenschaften eines Objekts werden ebenso als dimensionelle Messgeräte im vorliegenden Sinne verstanden. Ferner werden auch Computertomographen als Messgeräte im vorliegenden Sinne verstanden, mit denen bspw. aus einem Querschnitt eines Messobjektes ein Messbild generiert werden kann.

Koordinatenmessgeräte mit taktilen und/oder optischen Messsensoren werden in der dimensionellen Messtechnik verwendet, um die Form einer Werkstückoberfläche beispielsweise durch Abtastung zu bestimmen. Da die dimensionelle Messtechnik im Regelfall in Industriezweigen Anwendung findet, in denen sehr hohe Genauigkeiten, beispielsweise für nachfolgende Bearbeitungsschritte oder zur Qualitätssicherung erforderlich sind, ist eine fehlerfreie Messdurchführung sowie die fehlerfreie Aufnahme von Messpunkten von großer Wichtigkeit.

Mikroskope (z.B. Rasterelektronenmikroskope (REM) oder Rasterkraftmikroskope (RKM)) werden dazu verwendet, beispielsweise die Oberfläche eines Werkstücks (z.B. einer Platine) im Zuge der Qualitätskontrolle unter einer starken Vergrößerung anzusehen oder bildlich darzustellen. Die betrachteten Oberflächen weisen dabei oftmals Strukturen und/oder Einzelbauteile (z.B. Transistoren oder Widerstände) auf, deren Größenordnung unterhalb des Auflösungsvermögens eines menschlichen Auges, teilweise sogar auf atomarer Ebene, liegt. Mikroskopische Messgeräte werden bevorzugt in den Bereichen der Biotechnologie, Medizin, Elektrotechnik und/oder den Materialwissenschaften eingesetzt.

Um einen reproduzierbaren, fehlerfreien Messablauf mittels dieser Messgeräte zu gewährleisten, ist insbesondere bei der Durchführung von Serienmessungen, bei denen eine Vielzahl von Bauteilen gleicher Art in aufeinanderfolgenden Messungen dimensionell gemessen werden, eine möglichst detaillierte Planung und Steuerung des Messablaufs notwendig. Hierfür wird bei der Erstellung eines Messplans, der auch als Prüfplan bezeichnet wird, von einem Benutzer eine Vielzahl von Messpfaden an und um ein zu messendes Messobjekt mittels einer Software-Applikation definiert. Zu jedem Messpfad legt der Benutzer zudem verschiedene Messparameter und maschinenbezogene Steuerparameter an. Diese Messparameter und maschinenbezogenen Steuerparameter können beispielsweise eine Anzahl und Positionierung von anzufahrenden Messpunkten an dem zu messenden Werkstück oder auch eine festzulegende Messrichtung oder Messgeschwindigkeit sein.

Im beispielhaften Fall der Durchführung von Serienmessungen zur Sicherung einer gleichbleibenden Qualität, um ggf. Fertigungsungenauigkeiten frühzeitig erkennen zu können, ist es vorteilhaft, jedes zu messende Messobjekt gegenüber einem Bezugsobjekt zu kalibrieren. Zur Kalibrierung kann es bspw. notwendig sein, die Positionierung der in dem Prüfplan für ein Referenz-Messobjekt festgelegten Messpunkte für ein während der (Serien-) Messung zu messendes Messobjekt anzugleichen. Dadurch ist es möglich, die Vergleichbarkeit zwischen den verschiedenen Messobjekten und gegenüber dem Bezugsobjekt, beispielsweise in Form eines Referenz-CAD-Modells oder eines Normteils, eines sogenannten goldenen Teils (englisch: golden part), sicherzustellen.

Zur Gewährleistung, dass stets die in dem Messplan vorbestimmten Messpunkte auch tatsächlich an dem Messobjekt erfasst werden, erfolgt für jedes zu messende Messobjekt ein Abgleich der Position und Lage des Messobjekts auf dem Messobjektträger des Koordinatenmessgerätes bzw. Mikroskops mit einer Referenzposition und Lage des Referenzmessobjekts.

Zur Durchführung dieses Abgleichs werden im Regelfall Bilddaten von dem gerade auf dem Koordinatenmessgerät bzw. Mikroskop platzierten Messobjekt, beispielsweise durch einen optischen Sensor, erfasst, in denen das Messobjekt vor einem Hintergrund (beispielsweise eine Messauflage oder weitere technische Komponenten eines Bauteils) gezeigt sind.

Diese Bilddaten werden dann durch einen Experten (bspw. ein Fachmann auf dem Gebiet Bildauswertung) derart ausgewertet, dass das Messobjekt in dem aufgenommenen Bild segmentiert (d.h. als sich eindeutig von dem Hintergrund abhebend gekennzeichnet) wird, um so für den Abgleich mit dem Referenz-Messobjekt eindeutig identifizierbar zu sein.

Anstelle einer manuellen Segmentierung des aufgenommenen Bildes kann eine sogenannte 3-2-1-Ausrichtung herangezogen werden, die in der Messtechnik allgemein bekannt ist. Dabei werden sechs Punkte (die Referenzpunkte sind) auf dem Referenzdatensatz definiert, wobei die ersten drei Punkte der sechs Punkte herangezogen werden, um eine Drehung im Raum zu bestimmen. Die darauffolgenden zwei Punkte dienen zur Bestimmung der Drehung in der Ebene. Der letzte Punkt definiert die Verschiebung. Durch diese sechs Punkte kann die exakte Lage des Bauteils bestimmt werden. Diese sechs Punkte werden anschließend in der Serienmessung an dem zu vermessenden Bauteil erneut definiert, um eine Transformation von einem Referenz-Koordinatensystem auf ein Werkstück-Koordinatensystem berechnen zu können.

Bei zweidimensionalen Messaufgaben genügen die letzten 3 Punkte, da keine Drehung im Raum vorhanden ist, was in der Messtechnik als 2-1-Ausrichtung bezeichnet wird. Um die 3-2-1-Ausrichtung in Serienmessungen auszuführen, ist zwar kein Experte, jedoch ein hoher zeitlicher Aufwand notwendig, da die Referenzpunkte jeweils manuell definiert werden müssen.

Ist das Messobjekt in den erfassten Bildern segmentiert worden, kann im Folgenden ein Positions- und Lageabgleich in Bezug auf das Referenz-Messobjekt, anhand dessen der Prüfplan erstellt wurde, durchgeführt werden. Hierdurch kann das Messobjekt gegenüber dem Referenz-Messobjekt ausgerichtet bzw. können die anhand des Referenz-Messobjekts definierten Messparameter auf das gerade zu messende Messobjekt transformiert werden.

Um eine gute Bildaufnahmequalität bei der Erfassung der Bilddaten des Messobjekts zu gewährleisten, die beispielsweise für die Segmentierung zur eindeutigen Kantenfindung von Messobjekt-Kanten von Vorteil ist, wird das Messobjekt zusätzlich beleuchtet.

Hierzu sind im Wesentlichen zwei verschiedene Beleuchtungsmethoden bekannt. Zum einen ist es möglich, die Lichtquelle unterhalb des Werkstücks (beispielsweise durch eine durchsichtige Auflageplatte durchscheinend) anzuordnen und das Messobjekt durch einen optischen Sensor von oben (d.h. gegenüberliegend von der Lichtquelle) bildlich zu erfassen. Diese Beleuchtungsmethode ist im Allgemeinen als Durchlicht-Beleuchtung bekannt. Zum anderen besteht die Möglichkeit, das zu erfassende Messobjekt mittels der sogenannten Auflichtbeleuchtung zu beleuchten, wobei in diesem Fall sowohl der optische Sensor als auch die Beleuchtungseinrichtung auf der gleichen Seite bezüglich des Messobjekts angeordnet sind. Zudem sei erwähnt, dass verschiedene Arten von Auflichtbeleuchtung existieren, wobei in der industriellen Messtechnik die sog. Hellfeld-, Dunkelfeld- und Koaxial-Beleuchtung die gängigsten Arten darstellen.

Insbesondere bei der Auflichtbeleuchtung kommt es immer wieder aufgrund von unerwünschter Schattenbildung in einzelnen Messobjekt-Bereichen dazu, dass einzelne Kantenabschnitte des Messobjekts in den Bilddaten nicht eindeutig als Solche erkennbar sind oder in dem erfassten Bild als gegenüber der Ist-Position und Lage versetzt dargestellt sind. In einem solchen Fall gestaltet sich die Segmentierung des Messobjekts in diesen Bereichen selbst für einen Experten als schwierig und erfordert jeweils eine vom Einzelfall abhängige Strategie.

Um Fehler bei der Segmentierung und somit auch im dem späteren Abgleich und der Ausrichtung gegenüber dem Referenz-Messobjekt in Grenzen zu halten, ist ein hohes Maß an Expertenwissen (zumeist einhergehend mit einer langjährigen Berufserfahrung) von Nöten. Hierdurch verursacht der Arbeitsschritt des Segmentierens des Messobjekts in den erfassten Bildern, insbesondere bei der Durchführung von Serienmessungen, einen hohen zeitlichen Aufwand und damit einhergehende hohe Kosten.

Aufgrund des Vorgenannten ist es eine Aufgabe der vorliegenden Erfindung ein Verfahren und eine Vorrichtung zur Messobjekterkennung auf Basis von Bilddaten derart weiterzuentwickeln, dass die Messobjekterkennung auf vereinfachte und kostengünstig Weise für den laufenden Messbetrieb, insbesondere bei Serienmessungen, erfolgen kann.

Diese Aufgabe wird gemäß einem Aspekt der Erfindung durch ein Verfahren zur Messobjekterkennung auf Basis von Bilddaten gelöst, das die Schritte aufweist:
- Empfangen einer Vielzahl von Trainings-Bilddaten von Bildern, die jeweils von einem Trainingsobjekt erfasst wurden und jeweils zumindest teilweise das Trainingsobjekt und einen Objekthintergrund zeigen;
- Empfangen von Trainings-Segmentierungsdaten zu jedem der Bilder, die jeweils eine Segmentierung aufweisen, durch die das zumindest teilweise gezeigte Trainingsobjekt in jedem der Bilder identifiziert und von dem Objekthintergrund unterschieden wird;
- Empfangen von Mess-Bilddaten eines Messbildes, das zur Auswertung des Messobjekts erfasst wird und zumindest teilweise das Messobjekt und den Objekthintergrund zeigt;
- Ermitteln eines Segmentierungsmodells zur Erkennung des Messobjekts in dem Messbild auf Basis der Vielzahl von Trainings-Bilddaten und Trainings-Segmentierungsdaten mittels maschinengestützten Lernens.

Gemäß einem weiteren Aspekt der vorliegenden Erfindung wird die oben genannte Aufgabe durch eine Vorrichtung zur Messobjekterkennung auf Basis von Bilddaten gelöst, wobei die Vorrichtung eine Auswerte- und Steuereinheit aufweist, die dazu eingerichtet ist,
- eine Vielzahl von Trainings-Bilddaten von Bildern zu empfangen, die jeweils von einem Trainingsobjekt von dem Messsensor erfasst wurden und jeweils zumindest teilweise das Trainingsobjekt und einen Objekthintergrund zeigt;
- Trainings-Segmentierungsdaten zu jedem der Bilder zu empfangen, die jeweils eine Segmentierung aufweisen, durch die das zumindest teilweise gezeigte Trainingsobjekt in jedem der Bilder identifiziert und von dem Objekthintergrund unterschieden wird;
- Mess-Bilddaten eines Messbildes zu empfangen, das zur Auswertung des Messobjekts von dem Messsensor erfasst wird und zumindest teilweise das Messobjekt und den Objekthintergrund zeigt; und
- ein Segmentierungsmodell zur Erkennung des Messobjekts in dem Messbild auf Basis der Vielzahl von Trainings-Bilddaten und Trainings-Segmentierungsdaten mittels maschinengestützten Lernens zu ermitteln.

Gemäß einem weiteren Aspekt der vorliegenden Erfindung wird die vorliegende Aufgabe durch ein Computerprogrammprodukt gelöst, das einen Programmcode aufweist, der dazu eingerichtet ist, das oben genannte Verfahren auszuführen, wenn der Programmcode auf einem Computer ausgeführt wird.

Gemäß einem weiteren Aspekt der vorliegenden Erfindung wird die Aufgabe durch ein Messgerät zum dimensionellen Messen des Messobjekts gelöst. Das Messgerät weist einen Messsensor zur Erfassung der Bilddaten und die erfindungsgemäße Vorrichtung auf.

Das erfindungsgemäße Verfahren, welches vorzugsweise in der industriellen Messtechnik und Mikroskopie zur Anwendung kommt, ist vielseitig erweiterbar und somit in sämtlichen, bekannten Koordinatenmessgeräten und/oder in (vorzugsweise digitalen) Mikroskopen sowie allgemein bei bildgebenden Systemen und Verfahren (z.B. in Elektronenmikroskopen oder Computertomographen) einsetzbar.

Ein Vorteil des erfindungsgemäßen Verfahrens sowie der erfindungsgemäßen Vorrichtung ist, dass vorzugsweise lediglich einmal im Voraus auf Expertenwissen zurückgegriffen wird, indem eine (natürliche) Person eine Vielzahl von Trainings-Bilddaten und zugehörigen Trainings-Segmentierungsdaten erstellt. Diese werden dann für das erfindungsgemäße maschinengestützte Lernen als einen sogenannter gelabelter Datensatz zur Verfügung gestellt.

Durch das erfindungsgemäße Prinzip kann somit im laufenden Messbetrieb, besonders auch bei Serienmessungen, bei denen hohe Stückzahlen pro Zeiteinheit von ökonomischem Vorteil sind, auf den Einsatz eines Experten verzichtet werden, da dann das erfindungsgemäße Verfahren eigenständig, d.h. maschinengestützt, anhand der verfügbaren Trainings-Bilddaten und Trainings-Segmentierungsdaten gelernt hat bzw. stetig weiterlernt, wie ein im laufenden Messbetrieb in dem Messbild erfasstes Messobjekt optimal erkannt werden kann. Nach dem Training ist also kein manueller Eingriff des Benutzers bzw. Experten mehr notwendig. Die Vielzahl von Trainings-Bilddaten umfasst eine möglichst große Anzahl an Bildern, die von einem Experten jeweils in Hintergrund und Vordergrund (Messobjekt) eingeteilt werden bzw. in denen das Messobjekt zumindest teilweise gezeigt und durch den Experten manuell segmentiert wird. Vorzugsweise ist sowohl das Trainingsobjekt als auch das Messobjekt jeweils gesamthaft in den erfassten Bildern gezeigt.

Unter dem Begriff "Mess-Bilddaten" sind vorliegend jegliche Arten von Bilddaten zu verstehen, die nicht notwendigerweise zur Messung des Messobjektes erfasst werden. Im Wesentlichen genügen auch Bilddaten, die das Messobjekt (ggf. teilweise) umfassen. So werden in der Mikroskopie bspw. Bilder in manchen Fällen nur zur Auswertung und nicht zur Messung herangezogen. Vorliegend dient der Begriff "Mess-Bilddaten" daher im Wesentlichen zur Abgrenzung gegenüber dem Begriff "Trainings-Bilddaten". Für den Begriff "Trainings-Bilddaten" gilt dies in entsprechender Weise.

Mit anderen Worten basiert die Erfindung auf dem Prinzip, dass mittels eines (vorzugsweise überwachten) maschinellen Lernens auf Basis von Trainings-Bilddaten und Trainings-Segmentierungsdaten ein Segmentierungsmodell ermittelt werden kann, welches ein optimales Erkennen des Messobjekts in dem Messbild ermöglicht. Das Trainingsobjekt wurde vorzugsweise für eine Vielzahl verschiedener Beleuchtungssituationen und/oder Objekt-Positionierungen bildhaft erfasst und durch den Experten zur Erstellung des Trainingsdatensatzes segmentiert. Dabei ist es vorteilhaft, dass es sich bei dem Trainingsdatensatz um eine möglichst umfangreiche Sammlung von gekennzeichneten Trainingsdaten handelt, die vorzugsweise sämtliche relevante (Beleuchtungs- und/oder Positionierungs-) Szenarien umfasst.

Vorzugsweise handelt es sich bei dem Trainingsobjekt und dem Messobjekt um ein und dasselbe zu messende Werkstück. Bei dem Werkstück kann es sich beispielsweise um ein Karosseriebauteil oder ein sonstiges, technisches Bauteil handeln. Zudem kann das Werkstück auch eine spezifische zu messende Komponente auf einer elektrischen Platine, beispielsweise ein Transistor oder ein Widerstand, sein.

Bei dem mit den Bildern erfassten Hintergrund handelt es sich beispielsweise um eine Messobjektauflage, beispielsweise einen Werkstücktisch oder eine Mikroskop-Auflage oder auch um weitere technische Bauteile (z.B. eine Platinen-Oberfläche). Letzteres ist insbesondere bei kleiner dimensionierten Werkstücken (in der Größenordnung von einigen Millimetern und kleiner) der Fall.

Aufgrund der Vielzahl von Trainings-Bilddaten (z.B. mehrere Hunderte von Bildern), die vorzugsweise bei unterschiedlichsten Beleuchtungsbedingungen (Auflicht- und/oder Durchlicht-Beleuchtungsbedingungen) erfasst wurden kann vorzugsweise ein Trainingsdatensatz bereitgestellt werden. Alternativ oder ergänzend kann das Trainingsobjekt in einer Vielzahl verschiedener Positionen, Lagen und Ausrichtungen in Bezug auf ein Referenz-Messobjekt in der Vielzahl von Trainings-Bilddaten gezeigt sein, um den Trainingsdatensatz bereitzustellen. Somit kann (bspw. durch Interpolation) auch eine Vielzahl von auftretenden Inhomogenitäten gegenüber dem Referenz-Messobjekt abgedeckt werden.

Bei dem Referenz-Messobjekt handelt es sich vorzugsweise um ein Normteil oder ein CAD-Modell des Messobjekts bzw. des Trainingsobjekts. Bei dem Trainingsobjekt und dem Messobjekt kann es sich um ein und dasselbe Bauteil oder um ein Bauteil gleicher Art handeln, welches dem Referenz-Messobjekt zumindest von grundlegender Form und Dimension, resultierend aus Fertigungsungenauigkeiten, entspricht.

Somit ist es möglich, dass das Segmentierungsmodell vorzugsweise unter Berücksichtigung verschiedenster Parameter, wie z.B. die Beleuchtungssituation und Homogenität des Bildes, ein für das momentan erfasste Messbild optimales Segmentierungsmodell erstellt. Anhand dieses Segmentierungsmodells kann das in dem Messbild zumindest teilweise gezeigte Messobjekt im späteren Verlauf vorzugsweise eindeutig segmentiert werden, so dass es vor dem Objekthintergrund eindeutig identifizierbar ist.

Das Segmentierungsmodell zum Erkennen des Messobjekts in dem Messbild kann ein Algorithmus sein, der mittels des maschinengestützten Lernens (z.B. mittels eines neuronalen Netzes) auf Basis der Trainings-Bilddaten und Trainings-Segmentierungsdaten ermittelt wurde. Das maschinengestützte Lernen erfolgt vorzugsweise dadurch, dass die Auswerte- und Steuereinheit auf Basis der durch den Experten erstellten Trainingsdaten lernt, das Messobjekt in dem erfassten Bild ähnlich wie der Experte zu segmentieren.

Bei dem Segmentierungsmodell kann es sich alternativ auch um einen bekannten Algorithmus zur Segmentierung von Objekten in einem Bild handeln, der allerdings mittels des maschinengestützten Lernens aus einer Vielzahl von Algorithmen aufgrund von speziell für das empfangene Messbild geltenden Bedingungen bzw. Parametern (beispielsweise Beleuchtungssituation, Position und Lage des Messobjekts und/oder Homogenität des Bildes) ausgewählt wird. Dies ist insbesondere von Vorteil, da hierdurch eine manuelle Auswahl aus einer Vielzahl verschiedener Algorithmen, die sonst nur durch einen Experten mittels Expertenwissen erfolgen kann, entfällt.

Das Segmentierungsmodell ist vorzugsweise ein mathematischer Operator, durch den ein Segmentieren des Messobjekts in dem Messbild erfolgen kann, und darüber hinaus vorzugsweise auch ein Ausrichten des Messobjektes ermöglicht ist. Das Segmentierungsmodell ist vorzugsweise in Form eines Programmcodes auf einem Prozessor der Auswerte- und Steuereinheit ausführbar. Das Segmentierungsmodell wird vorzugsweise für jedes neue aufgenommene Messbild erneut ermittelt, so dass stets eine optimale Segmentierung in Abhängigkeit der jeweiligen Messobjekt-Positionierung und Ausrichtung sowie Beleuchtungssituation ermöglicht ist.

Mit anderen Worten ist das Ergebnis des erfindungsgemäßen Verfahrens die Ermittlung eines Segmentierungsmodells, mit dessen Hilfe ab diesem Zeitpunkt neue Messbilder in Form von Bilddaten ausgewertet werden können. Die Ausgabe des Segmentierungsmodells ist vorzugsweise eine markierte Region innerhalb des Messbildes, die der Algorithmus des Segmentierungsmodells als Messobjekt erkannt hat.

Der Messsensor des Messgeräts ist vorzugsweise ein optischer Messsensor bzw. eine Kamera. Der Messsensor kann bspw. auch eine Übersichtskamera (vorzugsweise mit einem Weitwinkel-Objektiv) sein, durch welche der gesamte Messraum in nur einem Bild erfasst werden kann. Der Messsensor kann entweder nur zum Erfassen der Messbilder bzw. Trainingsbilder eingesetzt werden. Alternativ kann der Messsensor ergänzend zur dimensionellen Messung des Messobjekts eingesetzt werden, wobei in einem solchen Fall das Messgerät ein optisches Messgerät ist. Ferner kann das Messgerät den Messsensor zur Erfassung der Bilddaten und zusätzlich einen weiteren optischen und/oder taktilen Sensor zur Erfassung der Koordinaten des Messobjekts aufweisen, wobei es sich in einem solchen Fall um ein Multi-Sensor-Messgerät handelt.

Das Messobjekt kann alternativ auch ein sog. Paletten-System sein, bei welchem mehrere auszuwertende Objekte auf einer Palette aufgespannt sind. In einem solchen Fall erfolgt eine vorzugsweise mittels des Segmentierungsmodells zu erfolgende Ausrichtung für die gesamte Palette.

In einer Ausgestaltung wurde die Vielzahl von Trainings-Bilddaten jeweils zur dimensionellen Messung des Trainingsobjektes erfasst wurde, und wobei die Mess-Bilddaten des Messbildes zur dimensionellen Messung des Messobjekts erfasst werden.

Das erfindungsgemäße Segmentierungsmodell wird also vorzugsweise für Messbilder ermittelt, die zur dimensionellen Erfassung eines Werkstücks (bzw. des Messobjekts) erfasst werden.

In einer Ausgestaltung weist das Verfahren ferner den Schritt auf: Segmentieren des zumindest teilweise gezeigten Messobjekts in dem Messbild mittels des Segmentierungsmodells.

In dieser Ausgestaltung gibt das erfindungsgemäße Verfahren nicht nur ein Segmentierungsmodell aus bzw. schlägt das Segmentierungsmodell für das Messbild vor, durch das das Messobjekt optimal von dem Objekthintergrund identifiziert (d.h. getrennt) werden kann. Ferner wird das ermittelte Segmentierungsmodell unmittelbar dazu verwendet, das Messobjekt direkt in dem empfangenen Messbild (quasi online) zu segmentieren. Auf diese Weise kann ein Messbild automatisch, d.h. mittels künstlicher Intelligenz, segmentiert werden.

In einer weiteren Ausgestaltung weist das Verfahren ferner den Schritt auf: Ausrichten des segmentierten Messobjekts zu einer vorbestimmten Objektreferenzposition und/oder Objektorientierung mittels des Segmentierungsmodells. Es sei erwähnt, dass diese Art der Ausrichtung lediglich bevorzugt ist, die Ausrichtung jedoch auch auf andere Art und Weise realisiert sein kann.

In dieser Ausgestaltung kann durch das ermittelte Segmentierungsmodell nicht nur die Segmentierung des Messobjekts in dem Messbild, sondern zugleich ein Ausrichten des segmentierten Messobjekts in Bezug auf die vorbestimmte Referenzposition und/oder Orientierung eines Referenz-Messobjekts erfolgen. Dabei wird insbesondere auch die Beleuchtungssituation, bspw. ein Schattenwurf, berücksichtigt, um daraus entstehende, vermeintliche Positionsabweichungen zwischen Messobjekt und Referenz-Messobjekt zu erkennen. Vorzugsweise kann durch diese Ausgestaltung also ein automatisches Ausrichten des Messobjektes zu beliebigen Beleuchtungssituationen und/oder zu einer beliebigen Position und Lage des Messobjekts in Bezug auf das Referenz-Messobjekt erfolgen. Dies ist insbesondere gegenüber dem Stand der Technik von Vorteil, da dort ein (Vor-) Ausrichten bislang eine manuelle Eingabe durch einen Experten benötigte oder nur in einigen besonderen Fällen automatisiert werden konnte.

Beispielhaft kann eine Durchlicht-Aufnahme zu einem zu messenden Bauteil generiert und erfindungsgemäß als Messbild erfasst werden. Das Messbild kann dann wiederrum mittels einer vorteilhaften Ausgestaltung des Verfahrens bzw. unter Verwendung des Segmentierungsmodells als Grundlage für eine automatische Vorausrichtung an einem Referenz-Messobjekt verwendet werden.

Das Referenz-Messobjekt dient dabei als Bezugsmaß, an dem der Benutzer bspw. den Messplan festgelegt hat. Anhand des Referenz-Messobjekts ist somit bspw. die Referenzposition von anzufahrenden Messpunkten an dem Messobjekte und/oder die Referenzposition und Lage eines Messobjekts selbst, bspw. in Bezug zu einer Aufspannposition auf dem Messtisch bzw. dem Mikroskop-Träger, festgelegt.

Bei dem Ausrichten des segmentierten Messobjekts findet ein Abgleich zwischen der Ist-Position und Ist-Orientierung des Messobjekts in Bezug auf eine SollPosition und/oder Soll-Orientierung des Referenz-Messobjekts statt, so dass die vorzugsweise an dem Referenz-Messobjekt festgelegten Soll-Messparameter, die in dem Messplan hinterlegt sind, an die Ist-Position und/oder Ist-Orientierung des Messobjekts angeglichen werden können.

Unter dem Begriff "Ausrichten" ist nicht unbedingt ein physisches Ausrichten, d.h. ein Neujustieren des Messobjekts auf dem Messtisch bzw. der Mikroskop-Auflage, zu verstehen. Der Begriff "Ausrichten" bezieht sich insbesondere auf das Anpassen bzw. Transformieren von Messparametern (z.B. Position von Messpunkten und/oder Messrichtung), die für das Referenz-Messobjekt festgelegt wurden, auf ein zu messendes Messobjekt. Durch dieses "Ausrichten" wird vorzugsweise eine Vergleichbarkeit zwischen Messobjekten und in Bezug auf ein Referenz-Messobjekt, insbesondere für Serienmessungen, sichergestellt.

In einer weiteren Ausgestaltung weist das Verfahren ferner die Schritte auf: Ermitteln einer Transformationsmatrix zum Transformieren von Messpunkten, die an dem ausgerichteten Messobjekt zu erfassen sind, in Bezug auf Messpunkte, die bezüglich der vorbestimmten Objektreferenzposition und/oder Objektorientierung festgelegt wurden; Transformieren der an dem Messobjekt zu erfassenden Messpunkte auf Basis der Transformationsmatrix.

Diese Ausgestaltung bezieht sich darauf, dass durch das erfindungsgemäße Ermitteln des Segmentierungsmodells ebenfalls eine Transformationsmatrix ausgegeben werden kann, mittels derer die Umrechnung vorzugsweise sämtlicher in dem Prüfplan in Bezug auf das Referenz-Messobjekt festgelegter Messparameter zu der Ist-Position und Ist-Lage des Messobjekts erfolgen kann. Durch die Transformationsmatrix können also beispielsweise die an dem Referenz-Messobjekt festgelegten Messpunkte automatisch auf Basis der durch die Segmentierung des Messobjekts in dem Messbild erhaltenen Positions- und Lageinformationen über das Messobjekt transformiert werden.

In einer weiteren Ausgestaltung wird das Messobjekt bezüglich eines CAD-Referenz-Messobjekts oder bezüglich eines Normteils ausgerichtet.

Durch diese Ausgestaltung ist definiert, dass es sich bei dem Referenz-Messobjekt beispielsweise um ein rein softwareseitiges, modellbasiertes Referenz-Messobjekt in Form eines CAD-Modells handeln kann. Alternativ kann das Referenz-Messobjekt auch in physischer Form, beispielsweise unter besonders überwachten Fertigungsbedingungen, hergestellt sein. Der Prüfplan kann also entweder anhand eines CAD-Modells erstellt werden oder sich auf ein tatsächlich hergestelltes, physisches (Norm-) Bauteil, ein sogenanntes goldenes Teil (englisch: golden part), beziehen.

In einer weiteren Ausgestaltung weist das maschinengestützte Lernen einen Algorithmus auf Basis eines neuronalen Netzes auf.

Das Ermitteln des Segmentierungsmodells zur Erkennung des Messobjekts in dem Messbild mittels maschinengestützten Lernens erfolgt also vorzugsweise unter Verwendung einer künstlichen Intelligenz in Form eines neuronalen Netzwerks.

Das maschinengestützte Lernen kann grundsätzlich durch ein sogenanntes teilüberwachtes Lernen (englisch: semi-supervised learning), bestärkendes Lernen (englisch: reinforcement learning), aktives Lernen (englisch: active learning) und/oder selbständiges Lernen (englisch: self-training) erfolgen. Grundsätzlich bedeutet das, dass der hinter dem maschinengestützten Lernen stehende Algorithmus irgendeine Art von künstlicher Intelligenz aufweist, d.h. die Methode des maschinellen Lernens verschiedene Varianten annehmen kann. Das neuronale Netz kann mittels des maschinengestützten Lernens vollständig aufgebaut werden oder alternativ mit Hilfe eines Basismodells (z.B. VGG16) unter Verwendung eines (anwendungsspezifischen) Top-Layers gebildet werden (sog. transfer learning).

In einer weiteren Ausgestaltung wird die Vielzahl von Trainings-Bilddaten von Bildern vor dem Empfangen durch eine Person gekennzeichnet, so dass der Experte zu jedem Bild die Trainings-Segmentierungsdaten erzeugt, durch die das zumindest teilweise gezeigte Trainingsobjekt (vorzugsweise eindeutig) von dem Objekthintergrund unterschieden und segmentiert wird.

Diese Ausgestaltung bezieht sich insbesondere den Schritt des Bereitstellens des gelabelten, d.h. gekennzeichneten, Trainings-Datensatzes zu Trainingszwecken für das maschinengestützte Lernen. Der Trainingsdatensatz wird also durch einen Experten mittels Expertenwissen erzeugt, indem der Experte eine Vielzahl von Trainings-Bilddaten manuell auswertet und darin gezeigte Messobjekte beispielsweise durch Auswahl eines bestimmten Segmentierungsverfahrens und unter Einbeziehung weiterer Parameter, wie Beleuchtungssituation und Homogenität des Bildes, manuell segmentiert.

In einer weiteren Ausgestaltung weist das Segmentierungsmodell eine formbasierte Anpassung, eine texturbasierte Anpassung, einen Trägheitsachsenabgleich, ein maschinelles Lernen, eine eigenschaftsbasierte Anpassung, ein Iterativ-Nächster-Punkt-Verfahren, ein normalisiertes Kreuzkorrelations-Verfahren (normalized crosscorrelation (NCC)) und/oder ein Fourier-Verfahren auf.

Anhand der aus der Segmentierung resultierenden Unterscheidbarkeit des Messobjekts von dem Objekthintergrund kann das Messobjekt somit zu einem Referenzdatensatz ausgerichtet werden, wobei die in dieser Ausführung genannten Ausrichtungsverfahren Anwendung finden können. Die aufgeführten Ausrichtungsverfahren stellen eine nicht-abschließende Liste von beispielhaften Ausrichtungsverfahren dar. Grundsätzlich ist es möglich mittels des Segmentierungsmodells die Bildsegmentierung durch eine Vermischung verschiedener Ausrichtungsverfahren und/oder anhand eines auf Basis einer künstlichen Intelligenz entwickelten Ausrichtungsverfahrens durchzuführen.

Grundsätzlich sei zu erwähnen, dass die Ausrichtung erfindungsgemäß auch anhand von Trainingsdaten ohne einen bereitgestellten Referenzdatensatz erfolgen kann, indem beispielsweise in den Trainingsdaten zusätzliche Positions- und Orientierungsinformationen zu dem Messobjekt hinterlegt werden. Auch aus einem solchen Trainingsdatensatz kann erfindungsgemäß ein Segmentierungsmodell mit vorzugsweise einer entsprechenden Transformationsmatrix erzeugt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zudem versteht es sich, dass sich die vorstehend genannten und die nachstehend noch zu erläuternden Merkmale und die in den abhängigen Ansprüchen definierten Merkmale nicht nur auf das erfindungsgemäße Verfahren, sondern in äquivalenter Weise auch auf die erfindungsgemäße Vorrichtung sowie auf das erfindungsgemäße Computerprogrammprodukt beziehen, ohne jeweils in gesonderter Form genannt zu werden.

Ausführungsbeispiele der Erfindung sind in den Zeichnungen dargestellt und werden in der nachfolgenden Beschreibung näher erläutert. Es zeigen:
- Fig. 1: ein Messgerät mit einem Ausführungsbeispiel der erfindungsgemäßen Vorrichtung;
- Fig. 2: ein Ablaufdiagramm eines Ausführungsbeispiels des erfindungsgemäßen Verfahrens;
- Fig. 3: eine erste schematische Darstellung zur Erläuterung von Prinzipien des erfindungsgemäßen Verfahrens;

- Fig. 4: eine zweite schematische Darstellung zur Erläuterung von Prinzipien des erfindungsgemäßen Verfahrens;
- Fig. 5: eine dritte schematische Darstellung zur Erläuterung von Prinzipien des erfindungsgemäßen Verfahrens; und
- Fig. 6: ein Blockdiagramm zur Erläuterung eines Ausführungsbeispiels des maschinengestützten Lernens gemäß dem erfindungsgemäßen Verfahren.

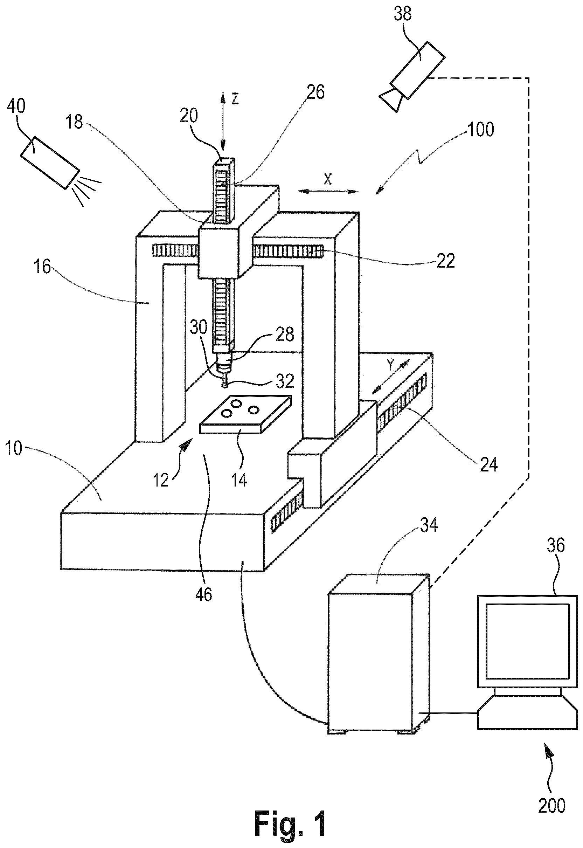

Fig. 1 zeigt ein beispielhaftes Messgerät mit einem Ausführungsbeispiel der erfindungsgemäßen Vorrichtung, auf der das erfindungsgemäße Verfahren ausführbar ist. Das Messgerät ist in seiner Gesamtheit mit der Bezugsziffer 100 gekennzeichnet. Die Vorrichtung ist in ihrer Gesamtheit mit der Bezugsziffer 200 gekennzeichnet.

Bei dem Messgerät 100 handelt es sich im vorliegenden Beispiel um ein Koordinatenmessgerät in sogenannter Portalbauweise. In anderen Ausführungsbeispielen kann es sich bei dem Messgerät 100 auch um ein Mikroskop, beispielsweise um ein Rasterelektronenmikroskop oder ein Rasterkraftmikroskop handeln. Ebenso kann es sich bei dem Messgerät 100 um andere Arten von Koordinatenmessgeräten oder grundsätzlich andere Arten von Messgeräten zur dimensionellen Messung handeln.

Das in Fig. 1 gezeigte Koordinatenmessgerät 100 weist eine Basis 10 auf. Bei der Basis 10 handelt es sich vorzugsweise um eine stabile Platte, die beispielsweise aus Granit gefertigt ist. Auf der Basis 10 ist eine Werkstückaufnahme 12 angeordnet, die dazu ausgebildet ist, ein Messobjekt 14 zu halten. Die Werkstückaufnahme 12 kann zu Beleuchtungszwecken vorzugsweise durchsichtig, bspw. aus einem (semi-) transparenten Material, gefertigt sein.

Auf der Basis 10 ist ein Portal 16 in Längsrichtung verschiebbar angeordnet. Das Portal 16 dient als bewegliche Trägerstruktur. Das Portal 16 weist zwei von der Basis 10 nach oben abragende Säulen auf, die durch einen Querträger miteinander verbunden sind und gesamthaft eine umgekehrte U-Form aufweisen.

Die Bewegungsrichtung des Portals 16 relativ zu der Basis 10 wird üblicherweise als Y-Richtung bezeichnet. An dem oberen Querträger des Portals 16 ist ein Schlitten 18 angeordnet, der in Querrichtung verfahrbar ist. Die Querrichtung wird üblicherweise als X-Richtung bezeichnet. Der Schlitten 18 trägt eine Pinole 20, die in Z-Richtung, also senkrecht zu der Basis 10, verfahrbar ist.

Die Bezugsziffern 22, 24, 26 bezeichnen Messeinrichtungen, anhand derer die X-, Y- und Z-Position des Portals 16, des Schlittens 18 und der Pinole 20 bestimmt werden können. Beispielsweise handelt es sich bei der Messeinrichtung 22, 24, 26 um Glasmessstäbe, welche als Messskalen dienen. Diese Messskalen sind in Verbindung mit entsprechenden Leseköpfen (hier nicht dargestellt) dazu ausgebildet, die jeweils aktuelle Position des Portals 16 relativ zu der Basis 10, die Position des Schlittens 18 relativ zu dem oberen Querbalken des Portals 16 und die Position der Pinole 20 relativ zu dem Schlitten 18 zu bestimmen.

An einem unteren, freien Ende der Pinole 20 ist ein Messkopf 28 angeordnet. Der Messkopf 28 ist dazu eingerichtet, Messpunkte an dem Messobjekt 14 zu erfassen. Der Messkopf 28 ist Teil eines Messsensors, dessen Messsensorik von dem Messkopf 28 separat angeordnet oder in diesem integriert oder über ein oder mehrere Kabel oder kabellos mit diesem verbunden sein kann. Der Messkopf 28 weist einen in Z-Richtung in Richtung der Basis abragenden, taktilen Taststift 30 auf. Der Taststift 30 ist dazu eingerichtet, mittels eines Tastkopfs 32 eine Oberfläche des Messobjekts 14 abzutasten.

Bei der Abtastung der Oberfläche des Messobjekts 14 erzeugt der Tastkopf 32 in dem Messkopf 28 ein elektrisches Messsignal, auf Basis dessen die dimensionellen Eigenschaften des zu vermessenden Messobjekts 14 ermittelt werden können. Zum Anfahren der Messpunkte an dem Messobjekt 14 wird der Messkopf 28 relativ zu der Werkstückaufnahme 12 bzw. zu dem Messobjekt 14 verfahren. Hierzu werden die Bewegungen des Portals 16 relativ zu der Basis 10, des Schlittens 18 relativ zu dem Portal 16 und der Pinole 20 relativ zu dem Schlitten 18 von einer Auswerte- und Steuereinheit 34 durch eine Vielzahl von vordefinierten Steuerbefehlen beispielsweise über eine CNC-Ansteuerung gesteuert.

Die Auswerte- und Steuereinheit 34 ist in Fig. 1 beabstandet von dem Koordinatenmessgerät 100 als separate Einheit angeordnet und mit der Basis 10 des Koordinatenmessgeräts 100 über mehrere Kabel verbunden. Die Auswerte- und Steuereinheit 34 ist ferner auch als Teil der Vorrichtung 200 anzusehen. Die Vorrichtung 200 dient nicht nur der Steuerung des Koordinatenmessgeräts 100, sondern auch zur Messobjekterkennung auf Basis von Bilddaten.

Die in der Vorrichtung 200 umfasste Auswerte- und Steuereinheit 34 weist vorliegend einen Bildschirm 36 auf. Die Auswerte- und Steuereinheit 34 weist vorzugsweise zudem einen Prozessor und eine Speichereinrichtung (z.B. eine Festplatte) auf. In dieser Speichereinrichtung ist ein Programmcode einer Softwareapplikation gespeichert, die mithilfe des Prozessors der Auswerte- und Steuereinheit 34 ausführbar ist. Über visuelle Darstellungen an dem Bildschirm 36 kann ein Benutzer vorzugsweise einen für eine spätere Messung von Messobjekten 14 benötigten Messplan mittels einer Softwareapplikation erstellen und sich Bilddaten graphisch anzeigen lassen und diese bearbeiten.

Ferner weist die Vorrichtung 200 erfindungsgemäß einen Messsensor 38 auf, mit dem beispielsweise Mess-Bilddaten von Messbildern zur dimensionellen Messung des Messobjekts erfasst werden. Der Messsensor 38 ist vorzugsweise ein optischer Messsensor, bspw. eine Kamera.

Der Messsensor 38 kann alternativ auch an der Pinole 20 angeordnet sein und in diesem Fall ergänzend zu der erfindungsgemäßen Bilderfassung des Messobjekts 14 auch zur eigentlichen Messung bzw. Erfassung der Koordinaten des Messobjekts 14 eingesetzt werden. In diesem Fall handelt es sich bei dem Koordinatenmessgerät 100 um ein optisches Koordinatenmessgerät.

Alternativ kann an der Pinole 20 zusätzlich zu dem taktilen Tastkopf 28 der Messsensor 38 angeordnet sein, dabei allerdings nur zur Erfassung der Bilddaten und nicht zur Messung der Koordinaten des Messobjekts 14 dienen. Die Messung der Koordinaten des Messobjekts 14 erfolgt nämlich über den taktilen Tastkopf. In diesem Fall handelt es sich um ein sogenanntes Multi-Sensor-Koordinatenmessgerät.

Bevor eine Koordinatenmessung sowie eine Messobjekterkennung beginnt, wird der Messablauf typischerweise in einem Messplan festgelegt. Hierbei wird insbesondere festgelegt, welche geometrischen Elemente (Messelemente) des Messobjekts 14 gemessen werden sollen und welche dimensionellen Messgrößen (Prüfmerkmale) dieser Messelemente durch das Koordinatenmessgerät 100 quantitativ an dem Messobjekt 14 erfasst werden sollen. Ferner werden in dem Messplan diverse Parameter zur Messstrategie, Messgeschwindigkeit sowie zur Steuerung des Koordinatenmessgerätes 100 und insbesondere des Messkopfes 28 festgelegt. Zur Sicherstellung einer späteren Verwendung des Prüfplans in (Serien-) Messungen erfolgt die Festlegung solcher Messparameter anhand eines Referenzmessobjekts, das bspw. als reines CAD-Modell oder als sogenanntes goldenes Bauteil vorliegen kann.

Nachdem ein Prüfplan anhand des Referenz-Messobjekts definiert wurde, kann die dimensionelle Messung des Messobjekts 14 erfolgen. Im Falle von Serienmessungen wird eine Vielzahl von Messobjekten 14 gleicher Art gemessen. Jedes Messobjekt 14, das auf der Werkstückaufnahme 12 bspw. manuell (durch einen Bediener) oder (teil-) automatisch aufgespannt wird, wird zum Abgleich mit dem Referenz-Messobjekt sowie zum Anpassen der Messparameter (z.B. der Position der im Prüfplan definierten Messpunkte) durch den optischen Messsensor 38 in Form von Bilddaten erfasst.

Zur Qualitätssicherung und Verbesserung der bildhaften Darstellung des Messobjektes 14 weist die Vorrichtung vorzugsweise eine Beleuchtungseinrichtung 40 auf. Die Beleuchtungseinrichtung 40 ist dazu eingerichtet, das Messobjekt 14 entweder von oben in Form einer Auflichtbeleuchtung oder von unten in Form einer Durchlichtbeleuchtung zu beleuchten.

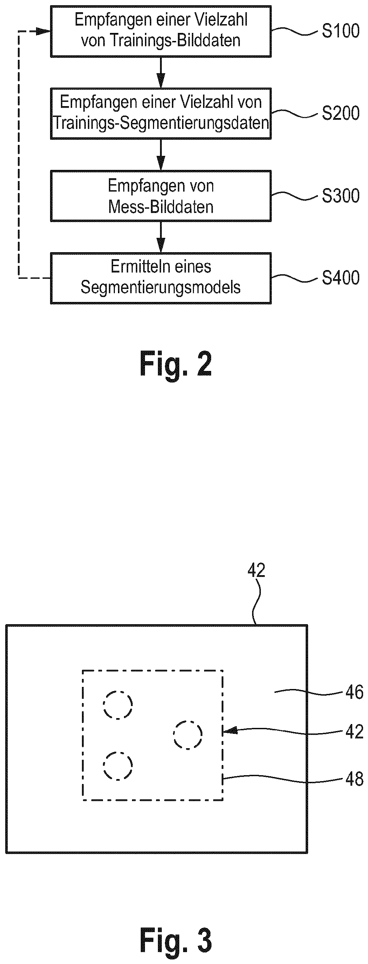

Zur besseren Nachvollziehbarkeit des erfindungsgemäßen Verfahrens, das mittels der Vorrichtung 200 ausgeführt werden kann, wird im Folgenden auf die Figuren 2 bis 5 Bezug genommen.

In Fig. 2 ist das erfindungsgemäße Verfahren als Ablaufdiagramm gezeigt. Zum besseren Verständnis ist eine Erweiterung des erfindungsgemäßen Verfahrens zudem in den Figuren 3 bis 5 in beispielhafter Art und Weise graphisch stark vereinfacht veranschaulicht. Die bezüglich Fig. 2 eingeführten Bezugszeichen sind jeweils den Figuren 3 bis 5 zu entnehmen.

In Schritt S100 erfolgt ein Empfangen einer Vielzahl von Trainings-Bilddaten von Bildern (z.B. Bild 42), die jeweils zur dimensionellen Messung eines Trainingsobjektes 44, bspw. durch den optischen Messsensor 38, erfasst wurden und jeweils das Trainingsobjekt 44 und einen Objekthintergrund 46 zeigen.

Ein beispielhaftes Trainingsobjekt 44, vorliegend ein Bauteil mit einem rechteckigen Querschnitt, welches drei Bohrungen aufweist, ist in Fig. 3 in dem Bild 42 mit dem Objekthintergrund 46 dargestellt. Vorzugsweise wurden von diesem Trainingsobjekt 44 mehrere hundert Bilder unter verschiedenen Beleuchtungsbedingungen und/oder unter verschiedenen Positionierungen des Trainingsobjekts 44 auf der Werkstückaufnahme 12 aufgenommen und durch einen Experten vor Beginn des erfindungsgemäßen Verfahrens ausgewertet bzw. das Trainingsobjekt manuell in den Bilddaten segmentiert.

In Schritt S200 erfolgt ein Empfangen von Trainings-Segmentierungsdaten zu jedem der Bilder (z.B. dem Bild 42), die jeweils eine Segmentierung 48 aufweisen, durch die das Trainingsobjekt 44 in jedem der Bilder 42 identifiziert und von dem Objekthintergrund 46 getrennt wird. Die Segmentierung 48 ist in Fig. 3 als Strich-Punkt-Linierung angezeigt und macht das Trainingsobjekt 44 vor dem Objekthintergrund 46 eindeutig identifizierbar. Diese Segmentierung wurde vorzugsweise von dem Experten manuell im Voraus angelegt.

In Schritt S300 erfolgt ein Empfangen von Mess-Bilddaten eines Messbildes, das zur dimensionellen Messung des Messobjektes 14 erfasst wird und das Messobjekt 14 und den Objekthintergrund 46, z.B. die Werkstückaufnahme 12, zeigt. Das Messbild wird vorzugsweise vor der dimensionellen Messung des Messobjekts 14 durch den optischen Sensor 38 erfasst. Bei dem Messobjekt 14 und dem Trainingsobjekt 44 handelt es sich vorzugsweise um ein Werkstück gleicher Art und Dimensionierung.

Die Messbilder können ggf. bedingt durch eine leicht veränderte Aufspannung des Messobjekts 14 auf der Werkstückaufnahme 12 Unterschiede in der Position des Messobjekts in dem erfassten Messbild aufweisen. Durch die Beleuchtung mittels der Beleuchtungseinrichtung 40 kann es dann dazu kommen, dass bspw. ein Schattenwurf im Messbild entsteht, der sich negativ auf einen Abgleich mit einem Referenz-Messobjekt auswirken kann und daher eine Einbeziehung erfordert.

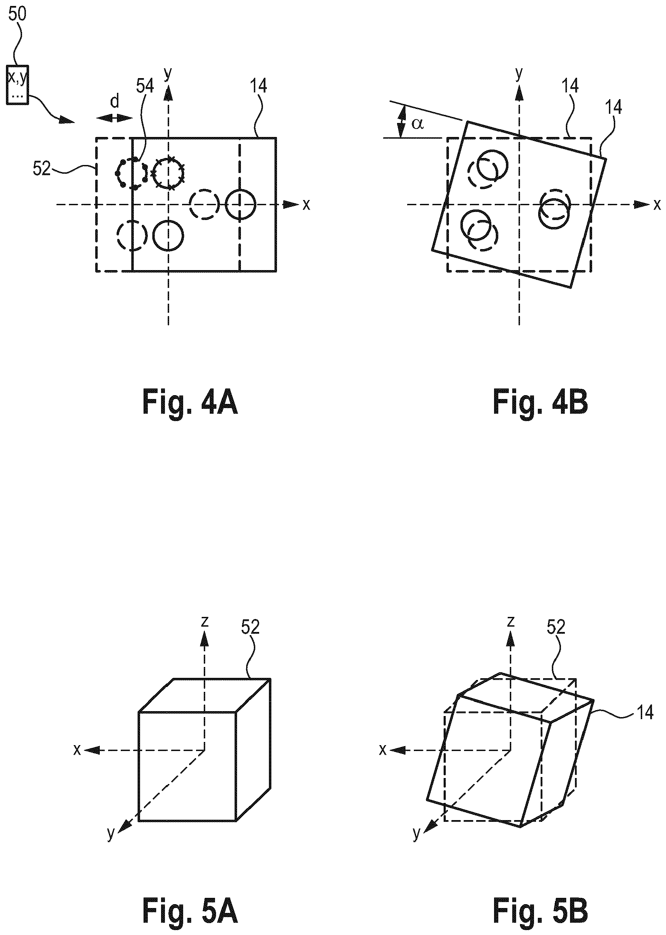

In Schritt S400 erfolgt ein Ermitteln eines Segmentierungsmodells 50 (siehe schematisch in Fig. 4A) zur Erkennung des Messobjektes 14 in dem Messbild auf Basis der Vielzahl von Trainings-Bilddaten und Trainings-Segmentierungsdaten mittels maschinengestützten Lernens.

Vorzugsweise kann das erfindungsgemäße Verfahren weitere Schritte aufweisen. Bspw. kann ein Segmentieren des Messobjekts 14 in dem Messbild mittels des Segmentierungsmodells 50 erfolgen, so dass das Messobjekt 14 in dem Messbild bspw. ähnlich wie das Trainingsobjekt 44 in Fig. 3 durch eine gestrichelte Linie o.ä. von dem Objekthintergrund 46 hervorgehoben wird.

Vorliegend erfolgt durch das erfindungsgemäße Verfahren auch eine Ausrichtung des segmentierten Messobjekts 14 zu einer vorbestimmten Objektreferenzposition und/oder Objektorientierung eines Referenz-Messobjekts 52 mittels des Segmentierungsmodells 50. Das Referenz-Messobjekt 52 ist in den Figuren 4A und 4B jeweils als gestrichelte Linie angedeutet.

Es ist in Fig. 4A zu erkennen, dass das Messobjekt 14 in seiner Position in Bezug auf die Position des Referenz-Messobjekts 52 um einen Abstand d entlang der x-Achse abweicht. Eine solche Abweichung kann in anderen Fällen alternativ oder ergänzend entlang der y- und oder z-Achse vorliegen.

Diese Abweichung d kann bspw. aufgrund eines Schattenwurfs durch eine "ungünstige" Beleuchtungssituation entstanden sein und/oder auf eine fehlerhafte Platzierung des Messobjektes 14 auf der Werkstückaufnahme 12 zurückgeführt werden.

Ferner weist das Verfahren ein Ermitteln einer Transformationsmatrix zum Transformieren von Messpunkten 56 (gekennzeichnet durch Kreuze), die an dem ausgerichteten Messobjekt zu erfassen sind, in Bezug auf Messpunkte 54 (gekennzeichnet durch Punkte), die bezüglich der vorbestimmten Objektreferenzposition und/oder Objektorientierung des Referenz-Messobjekts 52 festgelegt wurden, sowie ein Transformieren der an dem Messobjekt 14 zu erfassenden Messpunkte 56 auf Basis der Transformationsmatrix auf. Mit anderen Worten werden im vorliegenden Fall aufgrund der Transformationsmatrix die im Prüfplan für das Referenz-Messobjekt 52 festgelegten Messpunkte 54 jeweils um den Abstand d entlang der x-Achse verschoben.

In Fig. 4B ist ein Fall einer Verdrehung um einen Winkel α des Messobjekts 14 gegenüber dem Referenz-Messobjekt 52 gezeigt, die bspw. durch Anwendung einer Transformationsmatrix (Drehmatrix) ausgeglichen werden kann. Das Referenz-Messobjekt 52 ist vorliegend ein CAD-basiertes Referenzmodell. Das Angleichen der Messpunkte 56 erfolgt vorzugsweise durch Transformation der jeweiligen Position der Messpunkte 52 mittel eines Drehmatrix um den Winkel α (im Urzeigersinn).

In den Figuren 5A und 5B ist beispielhaft ein Würfel als dreidimensionales Referenz-Messobjekt 52 gezeigt. Wie in Fig. 5B zu erkennen ist, kann im Dreidimensionalen neben einer Verschiebung und Verdrehung auch eine Verkippung vorliegen, die erfindungsgemäß ebenfalls über die Ermittlung einer entsprechenden Transformationsmatrix ausgeglichen werden kann.

Es sei zudem erwähnt, dass das empfangene Messbild nach einer vorteilhaften, anhand des Segmentierungsmodells erfolgenden Segmentierung als Eingabedatei für die Schritte S100 und S200 zur zukünftigen Ermittlung eines Segmentierungsmodells zu einem zukünftig zu analysierenden Messbild dienen kann. In diesem Falle wird das Verfahren gemäß dem Ausführungsbeispiel in Fig. 2 fortlaufend (in Form einer Dauerschleife) ausgeführt, so dass empfangene Messbilder in Form von Trainings-Bilddaten nutzbar gemacht werden, d.h. ein stetiges Weiterlernen durch das maschinengestützte Lernen erfolgen kann.

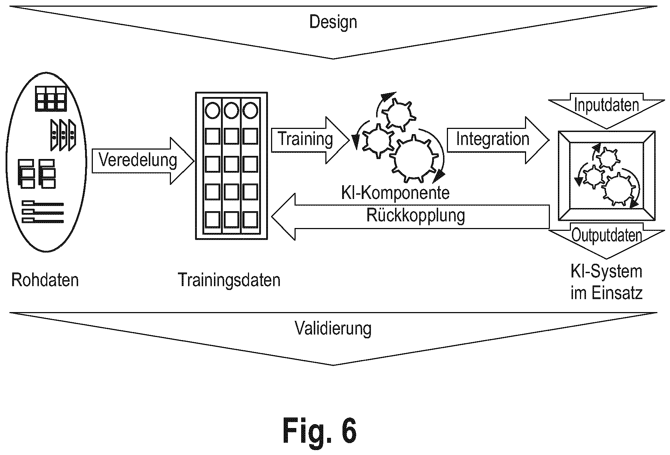

In Fig. 6 ist ein Blockdiagramm gezeigt, anhand dessen das maschinengestützte Lernen vereinfacht erläutert werden kann. Der lernende Algorithmus (z.B. ein neuronales Netz) erhält als Eingangsdaten (sog. Rohdaten), die durch einen Experten veredelt bzw. gelabelt werden und so als Trainingsdatensatz dienen. Die Trainingsdaten dienen als Input für die KI-Komponente und werden in ein KI-System integriert, wenn dieses im Einsatz Input-Daten mittels künstlicher Intelligenz verarbeitet, um Output-Daten zu erzeugen. Zudem besteht eine Rückkopplung zwischen den Ausgangsdaten des Kl-Systems und den Trainingsdaten, da die Ausgangsdaten der künstlichen Intelligenz wiederum als Trainingsdaten dienen können. Mit anderen Worten dient der Ausgang des lernenden Algorithmus vorzugsweise zusammen mit Echtzeit-(Online-) ungelabelten Daten, bspw. resultierend aus gerade durchzuführenden Segmentierungen von Messobjekten, als Eingang zur Ermittlung des (jeweiligen) Segmentierungsmodells. Bei Anwendung des Segmentierungsmodells werden vorzugsweise erneut gelabelte Daten erzeugt, die in der nächsten Lern-Stufe der künstlichen Intelligenz bzw. des neuronalen Netzes als gelabelte (Trainings-) Daten fungieren.

## Patentansprüche

1. Verfahren zur Messobjekterkennung auf Basis von Bilddaten, das die Schritte aufweist:
- Empfangen (S100) einer Vielzahl von Trainings-Bilddaten von Bildern (42), die jeweils von einem Trainingsobjekt (44) erfasst wurden und jeweils zumindest teilweise das Trainingsobjekt (44) und einen Objekthintergrund (46) zeigen;
- Empfangen (S200) von Trainings-Segmentierungsdaten zu jedem der Bilder (42), die jeweils eine Segmentierung (48) aufweisen, durch die das zumindest teilweise gezeigte Trainingsobjekt (44) in jedem der Bilder (42) identifiziert und von dem Objekthintergrund (46) unterschieden wird;
- Empfangen (S300) von Mess-Bilddaten eines Messbildes, das zur Auswertung eines Messobjekts (14) erfasst wird und zumindest teilweise das Messobjekt (14) und den Objekthintergrund (46) zeigt;
- Ermitteln (S400) eines Segmentierungsmodells (50) zur Erkennung des Messobjekts (14) in dem Messbild auf Basis der Vielzahl von Trainings-Bilddaten und Trainings-Segmentierungsdaten mittels maschinengestützten Lernens.

2. Verfahren nach Anspruch 1, wobei die Vielzahl von Trainings-Bilddaten jeweils zur dimensionellen Messung des Trainingsobjektes erfasst wurde, und wobei die Mess-Bilddaten zur dimensionellen Messung des Messobjekts erfasst werden.

3. Verfahren nach Anspruch 1 oder 2, das ferner den Schritt aufweist:
- Segmentieren des zumindest teilweise gezeigten Messobjekts (14) in dem Messbild mittels des Segmentierungsmodells.

4. Verfahren nach einem der Ansprüche 1 bis 3, das ferner den Schritt aufweist:
- Ausrichten des segmentierten Messobjekts (14) zu einer vorbestimmten Objektreferenzposition und/oder Objektorientierung mittels des Segmentierungsmodells.

5. Verfahren nach Anspruch 4, wobei das Verfahren ferner die Schritte aufweist:
- Ermitteln einer Transformationsmatrix zum Transformieren von Messpunkten (56), die an dem ausgerichteten Messobjekt (14) zu erfassen sind, in Bezug auf Messpunkte (54), die bezüglich der vorbestimmten Objektreferenzposition und/oder Objektorientierung festgelegt wurden; und
- Transformieren der an dem Messobjekt (14) zu erfassenden Messpunkte (56) auf Basis der Transformationsmatrix.

6. Verfahren nach einem der Ansprüche 4 oder 5, wobei das Messobjekt (14) bezüglich eines CAD-Referenz-Messobjekts (52) oder bezüglich eines Normteils ausgerichtet wird.

7. Verfahren nach einem der Ansprüche 1 bis 6, wobei das maschinengestützte Lernen einen Algorithmus auf Basis eines neuronalen Netzes aufweist.

8. Verfahren nach einem der Ansprüche 1 bis 7, wobei die Vielzahl von Trainings-Bilddaten von Bildern (42) vor dem Empfangen durch eine Person gekennzeichnet wird, so dass der Experte zu jedem Bild (42) die Trainings-Segmentierungsdaten erzeugt, durch die das zumindest teilweise gezeigte Trainingsobjekt (44) von dem Objekthintergrund (46) unterschieden und segmentiert wird.

9. Verfahren nach einem der Ansprüche 1 bis 8, wobei das Segmentierungsmodell (50) eine formbasierte Anpassung, eine texturbasierte Anpassung, einen Trägheitsachsenabgleich, ein maschinelles Lernen, eine eigenschaftsbasierte Anpassung, ein iterativ-nächster-Punkt-Verfahren, ein NCC-Verfahren und/oder ein Fourier-Verfahren aufweist.

10. Computerprogrammprodukt mit Programmcode, der dazu eingerichtet ist, ein Verfahren nach einem der Ansprüche 1 bis 9 auszuführen, wenn der Programmcode auf einem Computer ausgeführt wird.

11. Vorrichtung zur Messobjekterkennung auf Basis von Bilddaten, wobei die Vorrichtung (200) eine Auswerte- und Steuereinheit (34) aufweist, die dazu eingerichtet ist,
- eine Vielzahl von Trainings-Bilddaten von Bildern (42) zu empfangen, die jeweils von einem Trainingsobjekt (44) erfasst wurden und jeweils zumindest teilweise das Trainingsobjekt (44) und einen Objekthintergrund (46) zeigt;
- Trainings-Segmentierungsdaten zu jedem der Bilder (42) zu empfangen, die jeweils eine Segmentierung (48) aufweisen, durch die das zumindest teilweise gezeigte Trainingsobjekt (44) in jedem der Bilder (42) identifiziert und von dem Objekthintergrund (46) unterschieden wird;
- Mess-Bilddaten eines Messbildes zu empfangen, das zur Auswertung eines Messobjekts (14) erfasst wird und zumindest teilweise das Messobjekt (14) und den Objekthintergrund (46) zeigt; und
- ein Segmentierungsmodell (50) zur Erkennung des Messobjekts (14) in dem Messbild auf Basis der Vielzahl von Trainings-Bilddaten und Trainings-Segmentierungsdaten mittels maschinengestützten Lernens zu ermitteln.

12. Vorrichtung nach Anspruch 11, wobei die Auswerte- und Steuereinheit (34) dazu eingerichtet ist, die Vielzahl von Trainings-Bilddaten zu empfangen, die jeweils zur dimensionellen Messung des Trainingsobjektes erfasst wurden, und die Mess-Bilddaten des Messbildes zu empfangen, das zur dimensionellen Messung des Messobjekts erfasst wird.

13. Vorrichtung nach Anspruch 11 oder 12, wobei die Auswerte- und Steuereinheit (34) ferner dazu eingerichtet ist, das zumindest teilweise gezeigte Messobjekt (14) in dem Messbild mittels des Segmentierungsmodells zu segmentieren.

14. Vorrichtung nach einem der Ansprüche 11 bis 13, wobei die Auswerte- und Steuereinheit (34) ferner dazu eingerichtet ist, das segmentierte Messobjekt (14) zu einer vorbestimmten Objektreferenzposition und/oder Objektorientierung mittels des Segmentierungsmodells (50) auszurichten.

15. Vorrichtung nach Anspruch 14, wobei die Auswerte- und Steuereinheit (34) ferner dazu eingerichtet ist, eine Transformationsmatrix zum Transformieren von Messpunkten (56), die an dem ausgerichteten Messobjekt (14) zu erfassen sind, in Bezug auf Messpunkte (54), die bezüglich der vorbestimmten Objektreferenzposition und/oder Objektorientierung festgelegt wurden, zu ermitteln, und die an dem Messobjekt (14) zu erfassenden Messpunkte (56) auf Basis der Transformationsmatrix zu transformieren.

16. Vorrichtung nach Anspruch 14 oder 15, wobei die Auswerte- und Steuereinheit (34) ferner dazu eingerichtet ist, das Messobjekt (14) bezüglich eines CAD-Referenz-Messobjekts (52) oder bezüglich eines Normteils Teils auszurichten.

17. Messgerät (100) zum dimensionellen Messen des Messobjekts (14), wobei das Messgerät (100) einen Messsensor (40) zur Erfassung der Bilddaten und die Vorrichtung nach einem der Ansprüche 11 bis 16 aufweist.

## Geänderte Patentansprüche

### Geänderte Patentansprüche gemäss Regel 137(2) EPÜ.

1. Verfahren zur Werkstückerkennung auf Basis von Bilddaten zur dimensionellen Erfassung eines Werkstücks, das die Schritte aufweist:
- Empfangen (S100) einer Vielzahl von Trainings-Bilddaten von Bildern (42), die jeweils von einem Trainingsobjekt (44) erfasst wurden und jeweils zumindest teilweise das Trainingsobjekt (44) und einen Objekthintergrund (46) zeigen;
- Empfangen (S200) von Trainings-Segmentierungsdaten zu jedem der Bilder (42), die jeweils eine Segmentierung (48) aufweisen, durch die das zumindest teilweise gezeigte Trainingsobjekt (44) in jedem der Bilder (42) identifiziert und von dem Objekthintergrund (46) unterschieden wird;
- Empfangen (S300) von Mess-Bilddaten eines Messbildes, das zur Auswertung des Werkstücks (14) erfasst wird und zumindest teilweise das Werkstück (14) und den Objekthintergrund (46) zeigt;
- Ermitteln (S400) eines Segmentierungsmodells (50) zur Erkennung des Werkstücks (14) in dem Messbild auf Basis der Vielzahl von Trainings-Bilddaten und Trainings-Segmentierungsdaten mittels maschinengestützten Lernens.

2. Verfahren nach Anspruch 1, wobei die Vielzahl von Trainings-Bilddaten jeweils zur dimensionellen Messung des Trainingsobjektes erfasst wurde, und wobei die Mess-Bilddaten zur dimensionellen Messung des Werkstücks (14) erfasst werden.

3. Verfahren nach Anspruch 1 oder 2, das ferner den Schritt aufweist:
- Segmentieren des zumindest teilweise gezeigten Werkstücks (14) in dem Messbild mittels des Segmentierungsmodells.

4. Verfahren nach einem der Ansprüche 1 bis 3, das ferner den Schritt aufweist:
- Ausrichten des segmentierten Werkstücks (14) zu einer vorbestimmten Objektreferenzposition und/oder Objektorientierung mittels des Segmentierungsmodells.

5. Verfahren nach Anspruch 4, wobei das Verfahren ferner die Schritte aufweist:
- Ermitteln einer Transformationsmatrix zum Transformieren von Messpunkten (56), die an dem ausgerichteten Werkstück (14) zu erfassen sind, in Bezug auf Messpunkte (54), die bezüglich der vorbestimmten Objektreferenzposition und/oder Objektorientierung festgelegt wurden; und
- Transformieren der an dem Werkstück (14) zu erfassenden Messpunkte (56) auf Basis der Transformationsmatrix.

6. Verfahren nach einem der Ansprüche 4 oder 5, wobei das Werkstück (14) bezüglich eines CAD-Referenz-Messobjekts (52) oder bezüglich eines Normteils ausgerichtet wird.

7. Verfahren nach einem der Ansprüche 1 bis 6, wobei das maschinengestützte Lernen einen Algorithmus auf Basis eines neuronalen Netzes aufweist.

8. Verfahren nach einem der Ansprüche 1 bis 7, wobei die Vielzahl von Trainings-Bilddaten von Bildern (42) vor dem Empfangen durch eine Person gekennzeichnet wird, so dass der Experte zu jedem Bild (42) die Trainings-Segmentierungsdaten erzeugt, durch die das zumindest teilweise gezeigte Trainingsobjekt (44) von dem Objekthintergrund (46) unterschieden und segmentiert wird.

9. Verfahren nach einem der Ansprüche 1 bis 8, wobei das Segmentierungsmodell (50) eine formbasierte Anpassung, eine texturbasierte Anpassung, einen Trägheitsachsenabgleich, ein maschinelles Lernen, eine eigenschaftsbasierte Anpassung, ein iterativ-nächster-Punkt-Verfahren, ein NCC-Verfahren und/oder ein Fourier-Verfahren aufweist.

10. Computerprogrammprodukt mit Programmcode, der dazu eingerichtet ist, ein Verfahren nach einem der Ansprüche 1 bis 9 auszuführen, wenn der Programmcode auf einem Computer ausgeführt wird.

11. Vorrichtung zur Werkstückerkennung auf Basis von Bilddaten zur dimensionellen Erfassung eines Werkstücks, wobei die Vorrichtung (200) eine Auswerte- und Steuereinheit (34) aufweist, die dazu eingerichtet ist,
- eine Vielzahl von Trainings-Bilddaten von Bildern (42) zu empfangen, die jeweils von einem Trainingsobjekt (44) erfasst wurden und jeweils zumindest teilweise das Trainingsobjekt (44) und einen Objekthintergrund (46) zeigt;
- Trainings-Segmentierungsdaten zu jedem der Bilder (42) zu empfangen, die jeweils eine Segmentierung (48) aufweisen, durch die das zumindest teilweise gezeigte Trainingsobjekt (44) in jedem der Bilder (42) identifiziert und von dem Objekthintergrund (46) unterschieden wird;
- Mess-Bilddaten eines Messbildes zu empfangen, das zur Auswertung des Werkstücks (14) erfasst wird und zumindest teilweise das Werkstück (14) und den Objekthintergrund (46) zeigt; und
- ein Segmentierungsmodell (50) zur Erkennung des Werkstücks (14) in dem Messbild auf Basis der Vielzahl von Trainings-Bilddaten und Trainings-Segmentierungsdaten mittels maschinengestützten Lernens zu ermitteln.

12. Vorrichtung nach Anspruch 11, wobei die Auswerte- und Steuereinheit (34) dazu eingerichtet ist, die Vielzahl von Trainings-Bilddaten zu empfangen, die jeweils zur dimensionellen Messung des Trainingsobjektes erfasst wurden, und die Mess-Bilddaten des Messbildes zu empfangen, das zur dimensionellen Messung des Werkstücks erfasst wird.

13. Vorrichtung nach Anspruch 11 oder 12, wobei die Auswerte- und Steuereinheit (34) ferner dazu eingerichtet ist, das zumindest teilweise gezeigte Werkstück (14) in dem Messbild mittels des Segmentierungsmodells zu segmentieren.

14. Vorrichtung nach einem der Ansprüche 11 bis 13, wobei die Auswerte- und Steuereinheit (34) ferner dazu eingerichtet ist, das segmentierte Werkstück (14) zu einer vorbestimmten Objektreferenzposition und/oder Objektorientierung mittels des Segmentierungsmodells (50) auszurichten.

15. Vorrichtung nach Anspruch 14, wobei die Auswerte- und Steuereinheit (34) ferner dazu eingerichtet ist, eine Transformationsmatrix zum Transformieren von Messpunkten (56), die an dem ausgerichteten Werkstück (14) zu erfassen sind, in Bezug auf Messpunkte (54), die bezüglich der vorbestimmten Objektreferenzposition und/oder Objektorientierung festgelegt wurden, zu ermitteln, und die an dem Werkstück (14) zu erfassenden Messpunkte (56) auf Basis der Transformationsmatrix zu transformieren.

16. Vorrichtung nach Anspruch 14 oder 15, wobei die Auswerte- und Steuereinheit (34) ferner dazu eingerichtet ist, das Werkstück (14) bezüglich eines CAD-Referenz-Messobjekts (52) oder bezüglich eines Normteils Teils auszurichten.

17. Messgerät (100) zum dimensionellen Messen des Werkstücks (14), wobei das Messgerät (100) einen Messsensor (40) zur Erfassung der Bilddaten und die Vorrichtung nach einem der Ansprüche 11 bis 16 aufweist.
